**Europäisches Patentamt**

**European Patent Office**

**Office européen des brevets**

(11) Veröffentlichungsnummer: **0 252 433**
**A1**

# (12) EUROPÄISCHE PATENTANMELDUNG

(21) Anmeldenummer: **87109507.1**

(22) Anmeldetag: **02.07.87**

(51) Int. Cl.4: **A01K 1/064 , A01K 1/08**

(30) Priorität: **10.07.86 AT 1870/86**

(43) Veröffentlichungstag der Anmeldung:
**13.01.88 Patentblatt 88/02**

(84) Benannte Vertragsstaaten:
**CH DE IT LI**

(71) Anmelder: **Felder, Michael**
**Salzbergstrasse 68**
**A-6060 Absam(AT)**

(72) Erfinder: **Felder, Michael**
**Salzbergstrasse 68**
**A-6060 Absam(AT)**

(74) Vertreter: **Torggler, Paul, Dr. et al**
**Wilhelm-Greil-Strasse 16**
**A-6020 Innsbruck(AT)**

(54) **Anbindevorrichtung für Vieh.**

(57) Anbindevorrichtung für Vieh mit einem an einem drehbaren Rohr befestigten gebogenen Haken (3), in welchen das Endglied (4) einer Kette einhängbar ist. Ein schwenkbares Verschlußstück (8) verhindert in seiner Schließstellung das Abgleiten des Endgliedes vom Haken und ist in dieser Stellung durch ein drehbares Sperrstück (10) verriegelbar, dessen Drehachse (11) in der Schwenkebene des Verschlußstückes liegt.

Fig. 1

EP 0 252 433 A1

Die Erfindung betrifft eine Anbindevorrichtung für Vieh, mit einem für mindestens zwei Stände gemeinsamen drehbaren Bedienungselement in Form eines Rohres od. dgl., undmit einem gebogenen Haken für jeden Stand, dessen eines Ende, vorzugsweise indirekt, am Bedienungselement befestigt ist, während in das andere, freie Ende das Endglied einer Kette od. dgl. einhängbar ist, sowie mit einem Verschlußstück, welches mittels eines auf einem Bolzen und einer diesem entsprechenden zylindrischen Bohrung gebildeten Drehgelenkes mit dem Haken schwenkbar verbunden ist und in seiner Schließstellung durch Versperren des Zwischenraumes zwischen Bedienungselement und Haken das Abgleiten des Endgliedes vom Haken verhindert, wobei das Verschlußstück in seiner Schließstellung gegen eine Verdrehung durch ein unter Federkraft stehendes Sperrstück verriegelbar ist, welches mittels eines Bolzens am Bedienungselement, vorzugsweise indirekt, drehbar gelagert ist.

Derartige Anbindevorrichtungen sind beispielsweise aus der AT-PS 367 959 bekannt. Das Sperrstück ist dabei als geschlitzte Ringfeder ausgebildet. Als nachteilig hat sich herausgestellt, daß diese Feder zumindestens über einen Teil ihres Umfanges völlig frei liegt und daher durch das Vieh leicht mit seinen Enden aus den Bohrungen herausgezogen wird. Dadurch wird nicht nur die Verriegelung aufgehoben, sondern es besteht vor allem die Gefahr, daß die Feder in das Futter fällt und zusammen mit diesem vom Vieh verschluckt wird, was zu schweren gesundheitlichen Störungen führen kann.

Ziel der Erfindung ist es, einen robusten, einfach aufgebauten und bedienbaren Federmechanismus zu schaffen, in welchem das Sperrstück geschützt angebracht ist und daher vom Vieh nicht weggerissen werden kann.

Dies wird erfindungsgemäß dadurch erreicht, daß die Achse des Bolzens, um den das Sperrstück drehbar gelagert ist, in der Schwenkebene des Verschlußstückes liegt, wobei Teile des Sperrstückes in dessen Sperrstellung im Schwenkweg des Verschlußstückes liegen.

Es wird also anstelle der bekannten Ringfeder als Sperrstück, welche um eine zu der Achse des Verschlußstückes parallele Achse gedreht wird und durch ihre Konstruktion setlich über den Lagerbock hinausragt, ein Sperrstück verwendet, welches in der Schließstellung des Verschlußstückes im wesentlichen am Lagerbock anliegt.

Dies ergibt eine einfache Konstruktion, bei welcher ein Lösen der Verriegelung und ein Losreißen einzelner Teile durch das Vieh unmöglich ist.

Die Erfindung wird nun anhand der Figuren in zwei Ausführungsbeispielen näher erläutert.

Fig. 1 zeigt eine Ansicht einer erfindungsgemäßen Anbindevorrichtung,

Fig. 2 ist eine Ansicht in Richtung A der Fig. 1. In der Fig. 3 ist eine Variante des Sperrstückes dargestellt, wobei dieses in der entriegelten Lage gezeichnet ist.

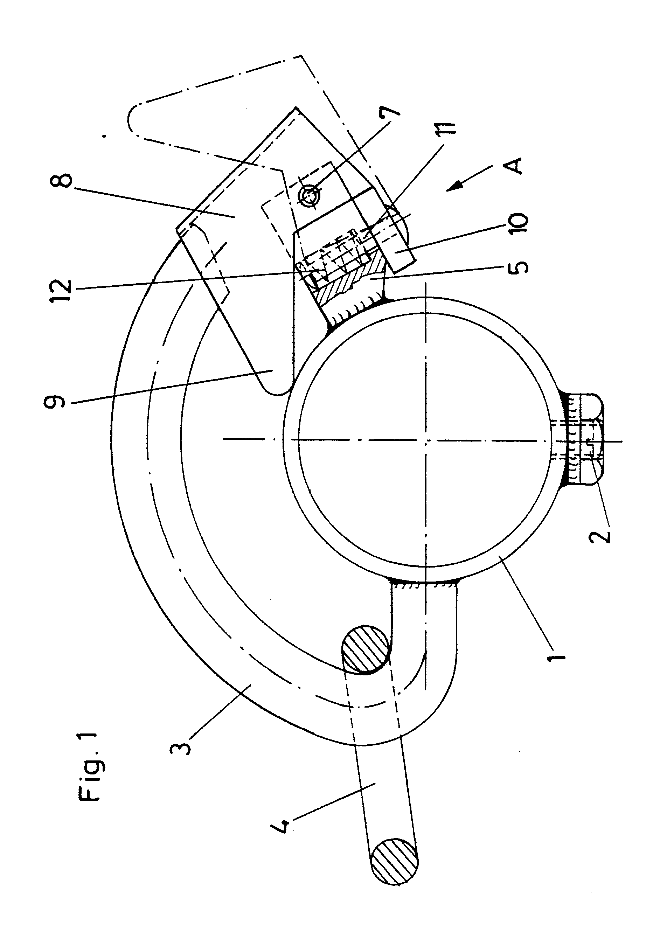

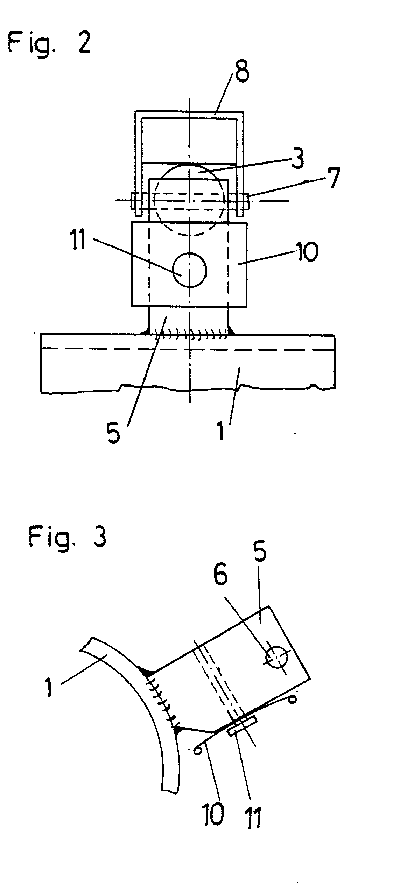

In der Ausführung nach den Fig. 1 und 2 ist an einem nicht dargestellten drehbaren Rohr ein Rohrstück 1 mittels einer Wurmschraube 2 befestigt. Am Rohrstück 1 ist ein gebogener Haken 3 angeschweißt, in welchen das Endglied 4 einer nicht dargestellten Anbindekette einhängbar ist. Im Bereich des freien Endes des Hakens 3 ist am Rohrstück 1 ein Lagerbock 5 angeschweißt. Eine Bohrung 6 in diesem nimmt einen Bolzen 7 auf, an dessen hervorstehenden Enden ein Verschlußstück 8 drehbar gelagert ist. Dieses ist U-förmig ausgebildet und ver hindert in der in Fig. 1 in ausgezogenen Linien dargestellten Lage mit seiner Nase 9 das Aushängen des Endgliedes 4 vom Haken 3.

Ein unbeabsichtigtes Schwenken des Verschlußstückes 8 in die in strichpunktierten Linien dargestellte Lage wird durch ein rechteckiges Sperrstück 10 verhindert, welches im Lagerbock 5 mittels eines Bolzens 11 drehbar gelagert ist. Dabei wird es durch eine Feder 12 in Richtung zum Lagerbock gedrückt. Soll das Vieh abgelassen werden, so wird das Sperrstück 10 entgegen der Kraft der Feder 12 vom Lagerbock 5 weggezogen und um 90° gedreht, so daß es zwischen die Schenkel des U-förmigen Verschlußstückes 8 zu liegen kommt und damit dieses an einem Ausschwenken nicht mehr hindert, wenn das Bedienungselement und damit das Rohrstück 1 samt dem Haken 3 um etwa 200° nach links gedreht wird. Beim Anbinden des Tieres wird nach dem Einhängen des Endgliedes 4 und Einschwenken des Verschlußstückes 8 das Sperrstück 10 wieder in die Querlage gedreht.

Wie die Fig. 3 zeigt, kann auch das Verschlußstück 10 selbst als Feder ausgebildet sein, welche um einen in den Lagerbock 5 eingesetzten Bolzen 11 drehbar gelagert ist. In dieser Figur ist das Sperrstück in derjenigen Lage eingezeichnet, in der das Verschlußstück 8 ausgeschwenkt werden kann.

**Ansprüche**

1. Anbindevorrichtung für Vieh, mit einem für mindestens zwei Stände gemeinsamen drehbaren Bedienungselement in Form eines Rohres od. dgl., und mit einem gebogenen Haken für jeden Stand, dessen eines Ende, vorzugsweise indirekt, am Bedienungselement befestigt ist, während in das andere, freie Ende das Endglied einer Kette od. dgl. einhängbar ist, sowie mit einem Verschlußstück, welches mittels eines auf einem Bolzen und einer diesem entsprechenden zylindrischen Bohrung gebildeten Drehgelenkes mit dem Haken - schwenkbar verbunden ist und in seiner Schließstellung durch Versperren des Zwischenraumes zwischen Bedienungselement und Haken das Abgleiten des Endgliedes vom Haken verhindert, wobei das Verschlußstück in seiner Schließstellung gegen eine Verdrehung durch ein unter Federkraft stehendes Sperrstück verriegelbar ist, welches mittels eines Bolzens am Bedienungselement, vorzugsweise indirekt, drehbar gelagert ist, dadurch gekennzeichnet, daß die Achse des Bolzens (11), um den das Sperrstück (10) drehbar gelagert ist, in der Schwenkebene des Verschlußstückes (8) liegt, wobei Teile des Sperrstückes (10) in dessen Sperrstellung im Schwenkweg des Verschlußstückes (8) liegen.

2. Anbindevorrichtung nach Anspruch 1, gekennzeichnet durch einen Lagerbock (5), in welchen ein Bolzen (11) eingesetzt ist, dessen Achse in der Schwenkebene des Verschlußstückes (8) liegt und gleichzeitig die Drehachse für das Sperrstück (10) darstellt.

3. Anbindevorrichtung nach Anspruch 2, dadurch gekennzeichnet, daß das Verschlußstück (8) einen U-förmigen Querschnitt aufweist und mit seinen Schenkeln den Lagerbock (5) seitlich übergreift und an diesem gelagert ist, und daß das Sperrstück (10) senkrecht zu seiner Drehachse zwei Abmessungen aufweist, wovon die eine größer und die andere kleiner als die lichte Weite zwischen den Schenkeln des Verschlußstückes (8) ist.

4. Anbindevorrichtung nach Anspruch 2 oder 3, dadurch gekennzeichnet, daß der Bolzen (11) durch eine Feder (12) belastet ist, welche das Sperrstück (10) in Richtung auf den Lagerbock (5) hin zu ziehen sucht.

5. Anbindevorrichtung nach Anspruch 4, dadurch gekennzeichnet, daß die Feder (12) eine Schraubendruckfeder ist, welche den Bolzen (11) umfaßt und sich einerseits an diesem und andererseits am lagerbock (5) abstützt.

6. Anbindevorrichtung nach Anspruch 2, dadurch gekennzeichnet, daß das Sperrstück (10) durch eine Blattfeder gebildet wird.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 905 359 (NEUE SAFIZ)<br>* Figuren 1,2; Zusammenfassung *<br>& AT-B-367 959 (Kat. D) * | 1 | A 01 K 1/064<br>A 01 K 1/08 |
| | --- | | |
| Y | US-A-1 477 858 (VON ARX)<br>* Figuren 1-3; Seite 1, Zeilen 8-66 * | 1 | |
| A | | 2,4,5 | |
| | ----- | | |

| | RECHERCHIERTE SACHGEBIETE (Int. Cl.4) |
|---|---|
| | A 01 K |

Der vorliegende Recherchenbericht wurde für alle Patentansprüche erstellt.

| Recherchenort | Abschlußdatum der Recherche | Prüfer |
|---|---|---|
| DEN HAAG | 08-10-1987 | VILBIG K |